# EUROPÄISCHE PATENTSCHRIFT

(11) **EP 2 264 972 B1**
(45) Veröffentlichungstag und Bekanntmachung des Hinweises auf die Patenterteilung: **14.11.2012**
(21) Anmeldenummer: 10158719.4
(22) Anmeldetag: 31.03.2010
(51) Int. Cl.: H04L 29/06, G08G 1/00

(54) **Echtzeitübertragung von Verkehrsdaten über IP-Verbindungen**
Real-time transfer of traffic data over IP connections
Transmission en temps réel de données de trafic par connexions IP

(30) Priorität: 15.06.2009 DE 102009026940
(43) Veröffentlichungstag der Anmeldung: 22.12.2010
(73) Patentinhaber: SWARCO Traffic Systems GmbH, 72669 Unterensingen (DE)
(72) Erfinder: Nolle, Matthias, 72622 Nürtingen (DE)
(74) Vertreter: TBK

(56) Entgegenhaltungen:
- PALAU C E ET AL: "Urban Traffic Control: A Streaming Multimedia Approach" IEEE INTERNATIONAL CONFERENCE ON MULTIMEDIA AND EXPO, 2005. ICME 2005. AMSTERDAM, THE NETHERLANDS, 06-08 JULY 2005, IEEE, PISCATAWAY, NJ, USA LNKD- DOI:10.1109/ICME.2005.1521499, 6. Juli 2005 (2005-07-06), Seiten 618-621, XP010843263 ISBN: 978-0-7803-9331-8
- OCIT ARBEITSKREIS AUSSCHREIBUNG: "OCI-Outstations Hinweise und Textvorschäge für die Beschaffung von Lichtsignalsteuerungssystemen mit OCIT-Schnittstellen, OCIT-O-Hinweise_V1.0" , [Online] 18. Dezember 2007 (2007-12-18), Seiten 1-38, XP002587657 Gefunden im Internet: URL:http://replay.waybackmachine.org/20100 617120345/http://www.roundtable-ocit.net/p df/OCIT-O-Hinweise_V1.0.pdf> [gefunden am 2010-06-17]
- PROTOGERAKIS M ET AL: "A System Architecture for a Telematic Support System in Emergency Medical Services" BIOINFORMATICS AND BIOMEDICAL ENGINEERING , 2009. ICBBE 2009. 3RD INTERNATIONAL CONFERENCE ON, IEEE, PISCATAWAY, NJ, USA, 11. Juni 2009 (2009-06-11), Seiten 1-4, XP031488045 ISBN: 978-1-4244-2901-1
- NIKKI CRANLEY ET AL: 'Real-Time Transport Protocols for Telemetry Data and Signaling', [Online] 28 Oktober 2008, MARYLAND, USA, XP55003007 ACRA Control Inc. Gefunden im Internet: <URL:http://www.acracontrol.com/wp-content/ uploads/2008/11/real-time-transport-protoco ls_nikki_cranley.pdf> [gefunden am 2011-07-18]

## Beschreibung

Die vorliegende Erfindung bezieht sich auf ein Verfahren zum Übertragen von Verkehrsdaten von einem verkehrstechnischen Feldgerät zu einer verkehrstechnischen Zentrale, auf ein verkehrstechnisches Feldgerät zum Übertragen von Verkehrsdaten an eine verkehrstechnische Zentrale, und auf eine verkehrstechnische Zentrale zum Empfangen von Verkehrsdaten von einem verkehrstechnischen Feldgerät.

Die Veröffentlichung von Palau et al, "Urban Traffic Control: A Streaming Multimedia Approach", IEEE, 2005, befasst sich mit einem Verkehrsüberwachungssystem, welches zum Senden von Videoinformationen IP-Netzwerke benutzt. Der Empfänger dieser Information ist ein Verkehrsverwaltungszentrum. Es werden Videodaten mittels RTP und RTSP gesendet.

Aus der Veröffentlichung "Offene Schnittstelle für Geräte der Straßenverkehrstechnik, Hinweise und Textvorschläge für die Beschaffung von Lichtsignalsteuerungsystemen mit OCIT-Schnittstellen des OCIT-Arbeitskreises Ausschreibung, Version 1.0 von 2007 ist grundsätzlich die Verwendung von OCIT-Prozessen und OCIT-Schnittstellen in der Straßenverkehrstechnik bekannt.

Verkehrstechnische Systeme bestehen im Allgemeinen aus einer oder mehreren Zentralen und mehreren Feldgeräten. Zentralen und Feldgeräte kommunizieren über bestimmte Schnittstellen, die der Verbindung zwischen Zentrale und Feldgeräten zum Zwecke der Steuerung, Überwachung und Datensammlung dienen. Die Übertragung der Daten zwischen Zentralen und Feldgeräten wird mit dem aus dem Internet bekannten Standard-Transportprotokoll TCP/IP durchgeführt. Dadurch hängt die Übertragungsgeschwindigkeit von den Wegen im Netz und vom Datenaufkommen ab. Somit ist das System nicht für Übertragungen mit deterministischem Zeitverhalten konzipiert. In bekannten Verkehrssteuersystemen werden Befehle und Daten nur beim Eintreffen bestimmter Ereignisse übertragen. Systemweite, zeitgenaue Aktionen werden uhrzeitgesteuert durchgeführt. Dazu ist in der Zentrale ein Zeitdienst vorhanden, nach dem alle geräteinternen Uhren gestellt werden, so dass im gesamten System alle Geräte über eine einheitliche Zeitbasis verfügen. Alle Meldungen und Befehle sind mit einem "Zeitstempel" versehen, der sie zeitlich einordnet. Eine Echtzeitübertragung von Daten ist somit nicht möglich.

Die Übertragung von Verkehrsdaten gemäß dem Stand der Technik wird im Folgenden näher erläutert. Die in dem Feldgerät anfallenden Verkehrsdaten werden über ein Archiv, das sich in dem Feldgerät befindet, gepuffert. Das Feldgerät schickt nach Pufferung der Daten eine Meldung (Notification) an die Zentrale. Die Meldung zeigt an, dass sich Verkehrsdaten in dem Archiv des Feldgeräts befinden. Nach Empfang der Meldung holt die Zentrale die gepufferten Verkehrsdaten aus dem Archiv ab. Die Abholung der Verkehrsdaten wird von der Zentrale initiiert. Der bei der Übertragung der Verkehrsdaten zur Zentrale entstehende Zeitversatz liegt in der Praxis bei 30 bis 60 Sekunden. Da die Abholung der Verkehrsdaten blockweise erfolgt, ist der maximale Zeitversatz durch die Größe des Blocks gegeben. Für den minimalen Zeitversatz bei einer Blockgröße von einer Sekunde und sekundlichem Abholen durch die Zentrale ergibt sich ein Zeitversatz von wenigen Sekunden. Dies muss allerdings durch oftmaliges Abholen der Daten durch die Zentrale erkauft werden. Daher hat dieses Verfahren Schwächen, wenn es darum geht, Daten abzuholen, die als Datenstrom anfallen (z.B. Zustände der Signalgruppen).

Es ist daher eine Aufgabe der Erfindung, den Zeitversatz bei der Übertragung von Verkehrsdaten von der Lichtsignalanlage zur Zentrale zu reduzieren, insbesondere auf ein Maß, das kleiner als die Taktung der verkehrstechnischen Steuerung ist.

Diese Aufgabe wird durch die in den unabhängigen Ansprüchen definierten Gegenstände gelöst. Vorteilhafte Weiterbildungen der Erfindung sind in den Unteransprüchen festgehalten.

Zentrale über eine IP-Verbindung überträgt.

Gemäß weiteren Aspekten der vorliegenden Erfindung:
- wird ein Starten des Datenstroms durch die verkehrstechnische Zentrale initiiert,
- speichert das verkehrstechnische Feldgerät die zu übertragenen Verkehrsdaten in einen Zwischenspeicher des verkehrstechnischen Feldgeräts,
- ruft die verkehrstechnische Zentrale die in dem Zwischenspeicher gespeicherten Verkehrsdaten ab,
- ist das verkehrstechnische Feldgerät eine Lichtsignalanlage,
- werden die Verkehrsdaten mittels Real-Time Protocol (RTP) übertragen, und der Datenstrom mittels Real-Time Streaming Protocol (RTSP) gesteuert,
- entsprechen die Verkehrsdaten dem OCIT-Standard.

Gemäß weiteren Aspekten der vorliegenden Erfindung:
- weist das verkehrstechnische Feldgerät ferner einen Zwischenspeicher zum Speichern der zu übertragenen Verkehrsdaten auf,
- kann das verkehrstechnische Feldgerät eine Lichtsignalanlage sein,
- werden die Verkehrsdaten mittels Real-Time Protocol (RTP) übertragen,
- entsprechen die Verkehrsdaten dem OCIT-Standard.

Gemäß weiteren Aspekten der vorliegenden Erfindung:
- weist die verkehrstechnische Zentrale ferner eine Steuereinrichtung zum Steuern des Datenstroms auf,
- initiiert die verkehrstechnische Zentrale ein Starten des Datenstroms,
- empfängt die Empfangseinrichtung Verkehrsdaten, die mittels Real-Time Protocol (RTP) übertragen werden,
- steuert die Steuereinrichtung den Datenstrom mittels Real-Time Streaming Protocol (RTSP),
- entsprechen die Verkehrsdaten dem OCIT-Standard.

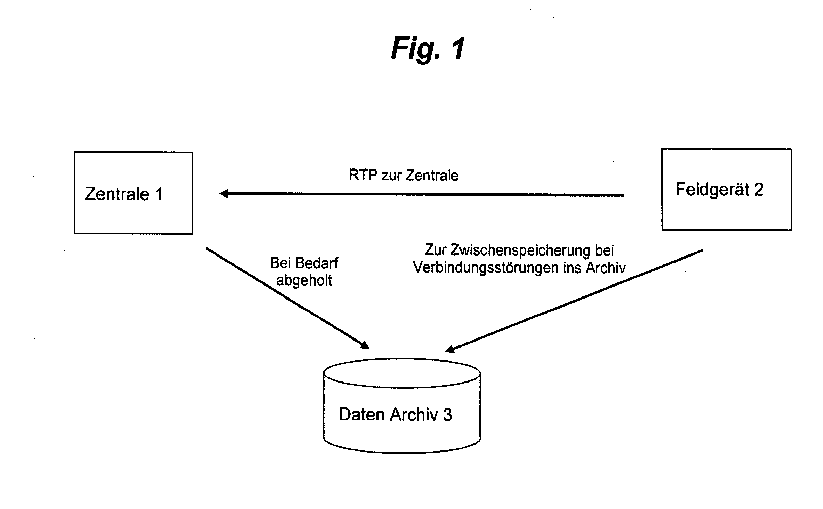

Fig. 1 zeigt die Wege der Verkehrsdatenübertragung gemäß der vorliegenden Erfindung.

Gemäß einem bevorzugten Ausführungsbeispiel der vorliegenden Erfindung wird ein Verfahren zum Übertragen von Verkehrsdaten in einem Datenstrom von einem verkehrstechnischen Feldgerät 2 zu einer verkehrstechnischen Zentrale 1 über eine IP-Verbindung vorgestellt. Das Verfahren ist unabhängig von dem Format der Verkehrsdaten anwendbar. Die zu übertragenen

Verkehrsdaten umfassen einerseits Meldungen, wie z.B. Betriebszustandsmeldungen, Störungsmeldungen und Versorgungsinformationen. Andererseits umfassen die Verkehrsdaten Informationen der verkehrstechnischen Steuerung, wie z.B. Signalgruppenzustände, Detektordaten, aggregierte Zählwerte und andere Messwerte, Telegramme der Beschleunigung des öffentlichen Verkehrs, und interne Parameter und Werte der verkehrstechnischen Steuerungslogik. Bei dem verkehrstechnischen Feldgerät 2 handelt es sich um eine Lichtsignalanlage.

Die verkehrstechnische Zentrale 1 initiiert ein Starten des Datenstroms von dem verkehrstechnischen Feldgerät 2 zu der verkehrstechnischen Zentrale 1 mittels Real-Time Streaming Protocol (RTSP). Dies geschieht durch Aufrufen der PLAY-Methode des RTSP-Protokolls durch die verkehrstechnische Zentrale 1. Ferner bietet RTSP eine Funktionalität zum Stoppen des Datenstroms. Der Datenstrom wird über eine URL identifiziert und die Konfiguration des Datenstroms mit den gewünschten Verkehrsdaten wird beim Starten des Datenstroms übergeben. Informationen über die Informationsinhalte des Datenstroms sind durch Aufrufen der DESCRIBE-Methode des RTSP-Protokolls durch die verkehrstechnische Zentrale 1 verfügbar.

Nach dem Starten des Datenstroms werden die Verkehrsdaten, sobald sie in dem verkehrstechnischen Feldgerät 2 anfallen, sofort mit dem Real-Time Protocol (RTP) an die verkehrstechnische Zentrale 1 übertragen. Die Übertragung der Verkehrsdaten findet somit in Echtzeit statt.

Neben der Verkehrsdatenübertragung mittels RTP von dem verkehrstechnischen Feldgerät 2 zu der verkehrstechnischen Zentrale 1 erfolgt eine Speicherung dieser Verkehrsdaten in einen Zwischenspeicher 3, wie in Fig. 1 gezeigt. Der Zwischenspeicher 3 kann sich sowohl in dem verkehrstechnischen Feldgerät 2 befinden als auch extern in einer separaten Einheit bereitgestellt werden. Diese Zwischenspeicherung dient beispielsweise als Vorsichtsmaßnahme für den Fall von Verbindungsstörungen zwischen dem verkehrstechnischen Feldgerät 2 und der verkehrstechnischen Zentrale 1. Diese Verbindungsstörungen können in Leitungsstörungen oder Paketverlusten bestehen. Die Verkehrsdaten können dann von der verkehrstechnischen Zentrale 1 bei Bedarf aus dem Zwischenspeicher 3 abgeholt werden. Somit wird durch das Speichern der Verkehrsdaten in den Zwischenspeicher 3 möglichen Verkehrsdatenverlusten vorgebeugt.

Gemäß einem weiteren Ausführungsbeispiel der vorliegenden Erfindung ergibt sich durch die Nutzung von RTP weiterhin die Möglichkeit, die Verkehrsdaten mit anderen Medien zu synchronisieren, wie z.B. anfallenden Videodaten.

Gemäß einem weiteren Ausführungsbeispiel der vorliegenden Erfindung können mit dem vorstehend vorgestellten Verfahren Car-to-Infrastructure (C2I)-Informationen z.B. Gefahrenmeldungen und Unfallmeldungen in kurzer Zeit zwischen einem Verkehrsmanagement System über das verkehrstechnische Feldgerät 2 und einem Verkehrsteilnehmer ausgetauscht werden, der über eine entsprechende Kommunikationseinrichtung Car-to-Car oder Car-to-Infrastructure verfügt.

Gemäß einem weiteren Ausführungsbeispiel der vorliegenden Erfindung entsprechen die Verkehrsdaten dem "Open Communication Interface for Road Traffic Control Systems"(OCIT)-Standard.

## Patentansprüche

1. Verfahren zum Übertragen von verkehrstechnischen Daten von einem verkehrstechnischen Feldgerät zu einer verkehrstechnischen Zentrale,
wobei das verkehrstechnische Feldgerät eine Lichtsignalanlage ist und wobei das verkehrstechnische Feldgerät die verkehrstechnischen Daten in Echtzeit in einem Datenstrom an die verkehrstechnische Zentrale über eine IP-Verbindung überträgt,
wobei die verkehrstechnischen Daten mittels Real-Time Protocol (RTP) übertragen werden, und der Datenstrom mittels Real-Time Streaming Protocol (RTSP) gesteuert wird und
wobei bei der Übertragung der verkehrstechnischen Daten der "Open Communication Interface for Road Traffic Control Systems"(OCIT)-Standard Verwendung findet.

2. Verfahren nach Anspruch 1, wobei ein Starten des Datenstroms durch die verkehrstechnische Zentrale initiiert wird.

3. Verfahren nach einem der Ansprüche 1 und 2, wobei die zu übertragenen verkehrstechnischen Daten in einem Zwischenspeicher gespeichert werden.

4. Verfahren nach Anspruch 3, wobei die verkehrstechnische Zentrale die in dem Zwischenspeicher gespeicherten verkehrstechnischen Daten abruft.

5. Lichtsignalanlage zum Übertragen von verkehrstechnischen Daten an eine verkehrstechnische Zentrale, mit
einer Übertragungseinrichtung zum Übertragen von verkehrstechnischen Daten an die verkehrstechnische Zentrale in Echtzeit in einem Datenstrom über eine IP-Verbindung,
wobei die Lichtsignalanlage angepasst ist, die verkehrstechnischen Daten mittels Real-Time Protocol (RTP) zu übertragen, wobei der Datenstrom von der verkehrstechnischen Zentrale mittels Real-Time Streaming Protocol (RTSP) gesteuert wird
und wobei die verkehrstechnischen Daten dem "Open Communication Interface for Road Traffic Control Systems" (OCIT)-Standard entsprechen.

6. Lichtsignalanlage nach Anspruch 5 ferner mit:
einem Zwischenspeicher zum Speichern der zu übertragenden verkehrstechnischen Daten.

7. Verkehrstechnische Zentrale zum Empfangen von verkehrstechnischen Daten von einer Lichtsignalanlage, mit
einer Empfangseinrichtung zum Empfangen von verkehrstechnischen Daten von der Lichtsignalanlage in Echtzeit in einem Datenstrom über eine IP-Verbindung, und
einer Steuereinrichtung zum Steuern des Datenstroms, wobei
die verkehrstechnische Zentrale angepasst ist, ein Starten des Datenstroms zu initiieren,
die Empfangseinrichtung angepasst ist, verkehrstechnische Daten zu empfangen, die mittels Real-Time Protocol (RTP) übertragen werden,
die Steuereinrichtung angepasst ist, den Datenstrom mittels Real-Time Streaming Protocol (RTSP) zu steuern, und
bei der Übertragung der Verkehrsdaten der "Open Communication Interface for Road Traffic Control Systems" (OCIT)-Standard Verwendung findet.

## Claims

1. Method for transmitting of traffic related data from a traffic related field device to a traffic related centre,
wherein the traffic related field device is a light-signal system, and wherein the traffic related field device transmits the traffic related data in a data stream to the traffic related centre via an IP connection in real-time,
wherein the traffic related data are transmitted by means of Real-Time Protocol (RTP), and the data stream is controlled by means of Real-Time Streaming Protocol (RTSP), and
wherein the "Open Communication Interface for Road Traffic Control Systems" (OCIT) standard is used for transmission of the traffic related data.

2. Method according to claim 1, wherein starting of the data stream is initiated by the traffic related centre.

3. Method according to any one of claims 1 and 2, wherein the traffic related data to be transmitted are stored in a buffer.

4. Method according to claim 3, wherein the traffic related centre retrieves the traffic related data stored in the buffer.

5. Light-signal system for transmitting traffic related data to a traffic related centre, comprising:
transmission means for transmitting traffic related data to the traffic related centre in a data stream via an IP connection in real-time,
wherein the light-signal system is adapted to transmit the traffic related data by means of Real-Time Protocol (RTP),
wherein the data stream is controlled by the traffic related centre by means of Real-Time Streaming Protocol (RTSP), and
wherein the traffic related data correspond to the "Open Communication Interface for Road Traffic Control Systems" (OCIT) standard.

6. Light-signal system according to claim 5, further comprising:
a buffer for storing the traffic related data to be transmitted.

7. Traffic related centre for receiving traffic related data from a light-signal system, comprising:
reception means for receiving traffic related data from the light-signal system in a data stream via an IP connection in real-time, and
control means for controlling the data stream, wherein
the traffic related centre is adapted to initiate starting of the data stream,
the reception means is adapted to receive traffic related data which are transmitted by means of Real-Time Protocol (RTP),
the control means is adapted to control the data stream by means of Real-Time Streaming Protocol (RTSP), and
the "Open Communication Interface for Road Traffic Control Systems" (OCIT) standard is used for transmission of the traffic related data.

## Revendications

1. Procédé de transmission de données de trafic d'un appareil de terrain pour l'ingénierie de trafic vers un central pour l'ingénierie de trafic,
l'appareil de terrain pour l'ingénierie de trafic étant une installation à signaux lumineux,
l'appareil de terrain pour l'ingénierie de trafic transmettant en temps réel les données de trafic au central pour l'ingénierie de trafic, dans un flux de données et au moyen d'une connexion IP,
les données de trafic étant transmises au moyen d'un protocole de transport en temps réel (RTP), et le flux de données commandé au moyen d'un protocole de streaming en temps réel (RTSP), et
la norme OCIT (« Open Communication Interface for Road Traffic Control Systems ») étant appliquée lors la transmission des données de trafic.

2. Procédé selon la revendication 1, où un démarrage des flux de données est déclenché par le central pour l'ingénierie de trafic.

3. Procédé selon la revendication 1 ou la revendication 2, où les données de trafic à transmettre sont sauvegardées dans une mémoire-tampon.

4. Procédé selon la revendication 3, où le central pour l'ingénierie de trafic appelle les données de trafic sauvegardées en mémoire-tampon.

5. Installation à signaux lumineux pour la transmission de données de trafic à un central pour l'ingénierie de trafic, comportant :
un dispositif de transmission, pour la transmission en temps réel de données de trafic au central pour l'ingénierie de trafic, dans un flux de données et au moyen d'une connexion IP,
ladite installation à signaux lumineux étant prévue pour transmettre les données de trafic au moyen d'un protocole de transport en temps réel (RTP),
le flux de données étant commandé par le central pour l'ingénierie de trafic au moyen d'un protocole de streaming en temps réel (RTSP),
et les données de trafic satisfaisant à la norme OCIT
(« Open Communication Interface for Road Traffic Control Systems »).

6. Installation à signaux lumineux selon la revendication 5, comportant en outre :
une mémoire-tampon pour la sauvegarde des données de trafic à transmettre.

7. Central pour l'ingénierie de trafic, pour la réception de données de trafic d'un appareil de terrain pour l'ingénierie de trafic, comportant :
un dispositif récepteur pour la réception en temps réel de données de trafic de l'appareil de terrain pour l'ingénierie de trafic, dans un flux de données et au moyen d'une connexion IP, et
un dispositif de commande pour la commande du flux de données,
le central pour l'ingénierie de trafic étant prévu pour déclencher un démarrage des flux de données,
le dispositif récepteur étant prévu pour recevoir les données de trafic transmises au moyen d'un protocole de transport en temps réel (RTP),
le dispositif de commande étant prévu pour commander le flux de données au moyen d'un protocole de streaming en temps réel (RTSP), et
la norme OCIT (« Open Communication Interface for Road Traffic Control Systems ») étant appliquée lors de la transmission des données de trafic.
